(19) Europäisches Patentamt
European Patent Office
Office européen des brevets

(11) **EP 3 213 109 B1**

(12) **EUROPEAN PATENT SPECIFICATION**

(45) Date of publication and mention
of the grant of the patent:
**19.05.2021 Bulletin 2021/20**

(51) Int Cl.:
***G01S 7/52*** *(2006.01)*     ***G01S 15/89*** *(2006.01)*

(21) Application number: **14830544.4**

(22) Date of filing: **28.10.2014**

(86) International application number:
**PCT/IB2014/002601**

(87) International publication number:
**WO 2016/067073 (06.05.2016 Gazette 2016/18)**

(54) **METHOD AND SYSTEM FOR ADJUSTING IMAGE GAIN**

VERFAHREN UND SYSTEM ZUR ANPASSUNG DER BILDVERSTÄRKUNG

PROCÉDÉ ET SYSTÈME D'AJUSTEMENT DE GAIN D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.09.2017 Bulletin 2017/36**

(73) Proprietor: **SUPERSONIC IMAGINE
13857 Aix-en-Provence Cedex 3 (FR)**

(72) Inventors:
 • **LOUPAS, Thanasis
 15452 Psychico (GR)**
 • **BRUCE, Matthew, Frederic
 13290 Les Milles (FR)**
 • **SKYBA, Danny
 Snohomish, WA 98296 (US)**

(74) Representative: **Plasseraud IP
66, rue de la Chaussée d'Antin
75440 Paris Cedex 09 (FR)**

(56) References cited:
**US-A- 5 579 768**     **US-A- 6 120 446
US-A1- 2011 054 317**

**Description**

FIELD OF THE INVENTION

The invention relates to medical diagnostic ultrasonic imaging and in particular to methods and systems for adjusting image gain during a transition from a first imaging state to a second imaging state.

BACKGROUND OF THE INVENTION

Gain and Time Gain Compensation (TGC) are two of the most important controls that users can use to optimize the appearance of ultrasound images, and in particular of B-mode images, of a medical ultrasound scanner.

The Gain control adjusts the global amount of amplification applied to the received ultrasound signals and thus controls for example the overall brightness of a B-mode image, whereas the Time Gain Compensation control provides depth-dependent amplification to compensate for the increased attenuation experienced by backscattered ultrasound signals received from increasingly larger depths.

In this respect, the Time Gain Compensation can be thought of as a way to define a depth vs amplification curve, for instance by specifying the desired amplification at a few discrete depths, whereas the Gain can be thought of as a mean to globally shift the entire Time Gain Compensation curve up (increased amplification) or down (decreased amplification).

Beside Time Gain Compensation, an imaging system may also offer Lateral Gain Compensation (LGC), able for example to compensate for lateral attenuation in an imaged region by applying varying amounts of amplification in a direction parallel to the transducer face. A medical diagnostic ultrasonic imaging may thus provide a variety of location dependant image gain compensations that define amplification curves as functions of locations in an imaged region.

Because of the importance of image gain and location dependant image gain compensation controls in the context of ultrasound imaging, many attempts have been made to automatically optimize these controls in order to save users from the effort and time required to continually optimize these controls during an ultrasound examination. As a result of these efforts, many modern scanners currently offer automated Gain / TGC optimization features which can be activated by the user when needed or may be running in the background and regularly adjust the TGC curve and overall Gain.

For a review of algorithms used in Gain / TGC optimization, see for example "Adaptive time gain compensation for ultrasonic imaging" by S D Pye et al, Ultrasound Med Biol, pp 205-212, 1992. US patents number 5579768, 6102859, 6120446, 6743174 and US application number 2003/0236459 A1 also describes examples of such Gain / TGC optimization methods.

While these automated Gain / TGC optimization features show improvements over the fully manual settings, it is still very common for users to use the automatic Gain / TGC features as a first approximation of optimum settings and then to refine the Gain and TGC settings manually to obtain user-optimized Gain and TGC. Manual adjustments of Gain and TGC are often performed several times per minute to follow changes in the image content as the user moves the transducer to investigate different structures of interest, or changes in imaging parameters that affect image brightness in a local or global manner.

Transitions between imaging states, for instance switching from Fundamental to Harmonic B-mode imaging, or from B-mode-only imaging to a composite imaging mode (B-mode plus Color Doppler, B-mode plus Elastography, etc), are also extremely common during a typical ultrasound examination. During a transition between imaging states, Gain and TGC settings almost always have to be adjusted to obtain optimum image quality for the specific conditions of the new imaging state.

Unfortunately, the Gain and TGC settings applied just before the transition cannot be carried over "as is" to a new imaging state where many parameters which have a direct impact on local and global brightness may have changed. As a result, the user frequently needs to re-optimize the B-mode Gain and TGC immediately after the transition, something that increases the time and effort of the examiner by a considerable amount, since such transitions are extremely common during a typical ultrasound examination.

The instant invention has notably for object to offer a method, and a system, for adjusting image gain compensation during a transition from a first imaging state to a second imaging state that does not show the above mentioned limitations.

To this aim, a first objet of the invention is thus, in a medical diagnostic imaging system, a method for adjusting image gain compensation during a transition from a first imaging state to a second imaging state, wherein the first imaging state differs from the second imaging state, the method comprising the steps of:

determining at least one first image power value based on at least one image acquired in the first imaging state with a first image gain compensation, said image acquired in the first imaging state being produced by a series of ultrasound waves emission and ultrasound signal acquisition;

determining at least one second image power value based on at least one image acquired in the second imaging state with an initial second image gain compensation, said image acquired in the second imaging state being produced by a series of ultrasound waves emission and ultrasound signal acquisition;

determining at least one image power change value based on said first image power value and said second image power value ; and

determining at least one adjusted second image gain compensation based on said initial second image gain compensation and said image power change value.

With these features, it is possible to obtain similar local and/or global image brightness patterns before and after a transition from a first imaging state to a second imaging state.

In some embodiments, one might also use one or more of the following features:

- the method may further comprise the steps of:

receiving a request to perform a transition from the first imaging state to the second imaging state,
storing the at least one image acquired in the first imaging state with the first image gain compensation,
switching from the first imaging state to the second imaging state,
determining the initial second image gain compensation,
storing the at least one image acquired in the second imaging state with the initial second image gain compensation;

- the image gain compensation is a global gain of the image;
- the image gain compensation is a location dependant image gain compensation, in particular time gain compensation or lateral gain compensation;
- a plurality of first image power values are determined, being associated to locations in said at least one image acquired in the first imaging state,
a plurality of second image power values are determined, being associated to locations in said at least one image acquired in the second imaging state with the initial second image gain compensation,
a plurality of image power change values are determined based on said plurality of first image power values and said plurality of second image power values, and the adjusted second image gain compensation is determined based on said initial second image gain compensation and said plurality of image power change values;
- said images comprise beamformed signal values of ultrasound acquisitions, said beamformed signal values being obtained at the output of a module of a mid-end processing or a back-end processing portion of a signal processing chain of the medical diagnostic imaging system;
- the image power change value is compensated for effects that at least one subsequent module of the signal processing chain of the medical diagnostic imaging system have on signal power in the first imaging state and the second imaging state;
- said images comprise envelope values of beamformed ultrasound acquisitions obtained at the output of an envelope detection module of a signal processing chain of the medical diagnostic imaging system,
said image power values comprise mean power values of said envelope values, and
the image power change value is determined by dividing the first image power value by the second image power value;
- the image power change value is determined as a function of a first compression threshold and a second compression threshold, said compression thresholds being respectively used by a log compressor module of a signal processing chain of the medical diagnostic imaging system, respectively in the first imaging state and the second imaging state;
- during a step of storing at least one image acquired, a plurality of n images are stored, n being a multiple of a number of steering angles used to form a spatially compounded frame;
- the method further comprises a step of displaying an image acquired in the second imaging state with the adjusted second image gain compensation;
- the first imaging state differs from the second imaging state by at least one of the following features: amplitude of the transmit voltage, duration of the transmit voltage, acoustic power, number of focal zones, location of focal zones, dynamic range, compression curve characteristics, central frequency of the transmit ultrasound pulse, bandwidth of the transmit ultrasound pulse, filter applied to the received ultrasound signals, fundamental or harmonic imaging mode, number of steering angles, range of steering angles, spatial compounding, spatial compounding options, transmit apertures, receive apertures, line densities, B-mode-only imaging or composite imaging, temporal versus spatial resolution optimization setting, penetration versus spatial resolution optimization setting;
- the first imaging state and the second imaging states are B-mode imaging states and/or composite imaging states comprising a B-mode imaging states.

Another object of the invention is a medical diagnostic imaging system, adapted for adjusting image gain compensation during a transition from a first imaging state to a second imaging state, wherein the first imaging state differs from the second imaging state, comprising:

means of acquiring at least one image in the first imaging state with a first image gain compensation and at least one image acquired in the second imaging state with an initial second image gain compensation, said images acquired in the first imaging state and in the second imaging state being produced by a series of ultrasound waves emission and ultrasound signal acquisition;

means of determining a first image power value based on said image acquired in the first imaging state;

means of determining a second image power value based on said image acquired in the er- second imaging state;

means of determining an image power change value based on said first image power value and said second image power value; and

means of determining an adjusted second image gain compensation based on said initial second image gain compensation and said image power change value.

BRIEF DESCRIPTION OF THE DRAWINGS

Other characteristics and advantages of the invention will readily appear from the following description of several of its embodiments, provided as non-limitative examples, and of the accompanying drawings.

On the drawings:

- Figure 1 illustrates a typical medical diagnostic imaging system 1 according to an embodiment of the invention, and
- Figure 2 is a flowchart of a method for adjusting image gain compensation during a transition from a first imaging state to a second imaging state according to an embodiment of the invention.

On the different Figures, the same reference signs designate like or similar elements.

DETAILED DESCRIPTION

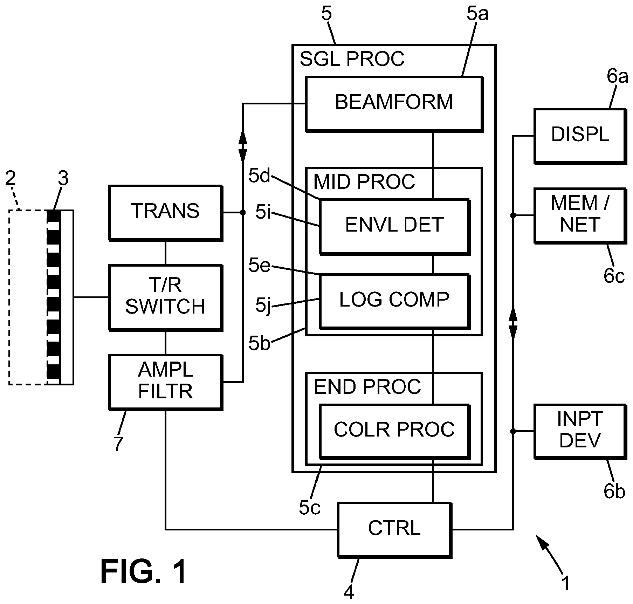

Figure 1 illustrates a typical medical diagnostic imaging system 1 according to an embodiment of the invention.

The imaging system 1 is able to perform ultrasound imaging of a region 2 of a medium to obtain final images that can be displayed to an operator, stored in a memory and/or transferred to a distant server or processing unit.

Imaging system 1 acquire images in various imaging modes such as A-mode, B-mode, CW-Doppler, PW-Doppler, Color Doppler, Power Doppler, M-mode, Harmonic Imaging, Shear wave imaging, Elasticity/Strain Imaging, this list being not limitative. Imaging system 1 may be able to acquire images in a composite imaging mode that combines several of the above mentioned imaging modes.

To this end, imaging system 1 comprises an array of transducers 3, a control unit 4 controlling and/or comprising a signal processing chain 5, and various input/output interfaces 6, such as display 6a, keyboard 6b, memories/network interfaces 6c etc...

The array of transducers 3 is, for instance, a linear array typically including a few tens of transducers (for instance 100 to 300) juxtaposed along an axis X as already known in usual echographic probes (the array 3 is then adapted to perform a bidimensional (2D) imaging of the region 2, but the array 3 could also be a bidimensional array adapted to perform a 3D imaging of the region 2).

The transducers 3 are controlled independently of one another by the control unit 4 and/or the beamforming module 5a of the signal processing chain 5 to emit ultrasound waves in the medium and acquire ultrasound signals comprising echoes generated by the ultrasound waves interacting with scatters in the region 2.

The ultrasound signals are then amplified by an amplifier unit 7 to obtain an amplified signal before being processed by the signal processing chain 5.

The amplifier unit 7 may comprise for instance a variable controlled amplifier and a low pass filter.

The amplifier unit 7 is able to apply a global gain to the ultrasound signals. The amplifier unit 7 is also able to apply location dependant image gain compensation that can be for instance time gain compensation or lateral gain compensation.

To this aim, the amplifier unit 7 is controlled by the control unit 4 and/or the signal processing chain 5 to be able to apply various gain compensations to the ultrasound signals in function of the time of acquisition of said ultrasound signals.

The amplifier unit 7 can also comprise a digital module located in the signal processing chain 5 that is able to apply global gain and/or location dependant image gain compensation. In some embodiment, the amplifier unit 7 comprises only digital modules.

Since the time of acquisition of an ultrasound signal is directly related to the location of a scatterer that reflected said ultrasound signal in region 2, the amplifier unit 7 is thus able to apply location dependant image gain compensation.

The signal processing chain 5 may comprise various modules 5a, 5b, 5c, 5i, 5j that process the amplified signal according to a specific imaging state in order to obtain a final image of the region 2.

By an "imaging state", it is meant the order and the selection of processing steps that lead to a final image to be displayed, stored and/or transferred to a distant unit, but also the parameters and settings associated to these processing steps. An imaging state thus comprises the selected imaging mode (B-Mode, Doppler, etc...) and the various parameters used in the acquisition and processing of the ultrasound signal such as the amplitude and duration of the transmit voltage applied to the transducers, acoustic power, number of focal zones, location of focal zones, dynamic range, compression curve characteristics, central frequency of the transmit ultrasound pulse, bandwidth of the transmit ultrasound pulse, filter applied to the received ultrasound signals, fundamental or harmonic imaging mode, number of steering angles, range of steering angles, spatial compounding, spatial compounding options, transmit apertures, receive apertures, line densities, B-mode-only imaging or composite imaging, temporal versus spatial resolution optimization setting, penetration versus spatial resolution optimization setting. The previous list is of course non limitative.

In the present description, any change occurring to one of the above characteristics of an imaging state can be considered as triggering a transition between a first imaging state, before the change in said characteristic, and a second imaging state, after the change in said characteristic.

Examples of transition between a first imaging state and a second imaging state are thus for instance changing the amplitude and/or duration of the transmit voltage applied to the transducers, going from Resolution to Penetration optimization, switching from Fundamental to Harmonic imaging and vice versa, or going from B-mode-only to B-mode plus Color Doppler, the list being not limitative.

During such a transition between imaging states, image gain and location dependant image gain compensation almost always have to be adjusted to obtain optimum image quality for the specific conditions of the new imaging state.

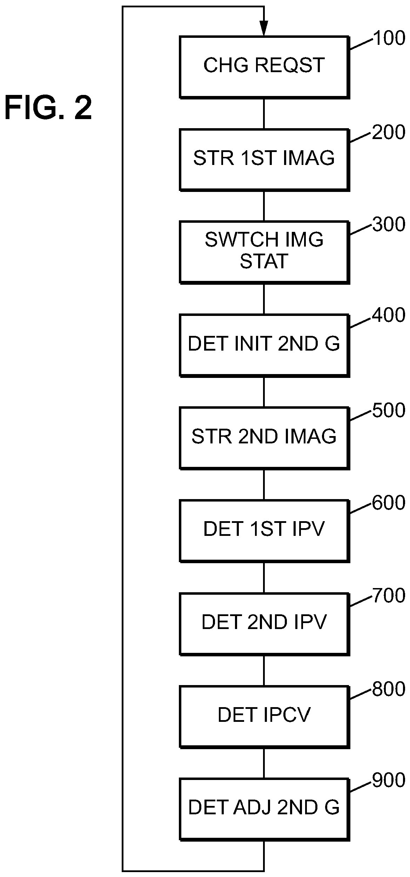

Referring now also to figure 2, according to the present invention, a method for adjusting image gain compensation during a transition from a first imaging state to a second imaging state can comprise the following steps.

Following a request 100 to perform a transition from a first imaging state to a second imaging state, the method thus comprise a step 200 of storing at least one image acquired in the first imaging state with a first image gain compensation.

The request to perform a transition may be generated following a command transmitted by an operator (changing an imaging setting for instance) or be automatically generated as a result of an automatic process performed by the imaging system 1.

In some embodiment of the invention, system 1 stores in memory the last N_1 frames of image data acquired in the first imaging state, before the transition. N_1 can be a predefined number that may be selected by the operator, automatically adjusted or designed as an optimal number of frames or can be set on the fly during said acquisitions. N_1 can for instance be selected to be a multiple of a number of steering angles used to form a spatially compounded frame before and after the transition in an embodiment of the invention where one of the first and the second imaging state comprise a compounded imaging.

By "image" and "frames of image data", it is understood signal values obtained at the output of a module 5i of the signal processing chain 5. Module 5i can generally be any module in the signal processing chain 5.

Images and image data comprise in particular beamformed signal values and said module 5i is thus either a beamforming module 5a or a module located after the beamforming module 5a along the signal processing chain 5. By "image" and "image data", it is in particular meant beamformed signal values obtained at the output of a module 5i of a mid-end processing portion 5b or back-end processing portion 5c of the signal processing chain 5. Specific "images" or "image data" are the "final images" that are obtained at the end of the processing chain 5 and can be displayed to an operator, stored in a memory and/or transferred to a distant server or processing unit.

The "image" and "image data" can thus for instance be taken from anywhere in the signal processing chain 5 between the beamformer module 5a and the display 6a, for example before or after envelope detection module, log compression module, scan conversion module, spatial compounding module, post-processing module or color mapping module, etc.

In particular, an "image" or a "frame of image data" is understood as a complete scan of a region of interest in the imaging mode selected. By complete scan, it is mean a series of ultrasound waves emission and ultrasound signals acquisition that is sufficient to compute a final image to be displayed to an operator, stored in a memory and/or transferred to a distant server or processing unit.

By "image gain compensation", it is understood a global gain of the image and/or one or several location dependant image gain compensations such as time gain compensation and/or lateral gain compensation.

The control unit 4 may then switch from the first imaging state to the second imaging state 300. As detailed above, such a switch may involve switching imaging mode (A-mode, B-mode, etc...) and/or changing one of the parameters of the signal processing chain 5.

The control unit 4 then determines 400 an initial second image gain compensation to be used for an initial acquisition in the second imaging state, immediately after the switching 300 from the first imaging state to the second imaging state.

The initial second image gain compensation may be identical to the first image gain compensation in an embodiment of the invention. Alternatively, the initial second image gain compensation may be adjusted automatically, for instance by an automated Gain / TGC optimization method.

Once the initial second image gain compensation has been determined, the imaging system 1 performs an acquisition in the second imaging state and stores 500 at least one image acquired in the second imaging state with the initial second image gain compensation.

Again, in some embodiment of the invention, system 1 stores in memory the first N_2 frames of image data acquired in the second imaging state, after the transition. N_2 can be a predefined number that may be selected by the operator, automatically adjusted or designed as an optimal number of frames or can be set on the fly during said acquisitions.

Based on the images acquired in the first imaging state and the second imaging state it is possible to determine adjusted second image gain compensation.

First, at least one first image power value is determined based on said image acquired in the first imaging state 600.

In one embodiment of the invention, the first image power value is a single value representative of the global power in the image acquired in the first imaging state. In the case where a plurality of N_1 images are acquired in the first imaging state, the first image power value may be averaged over the plurality of N_1 images. The calculations could treat all image data values equally, or give more emphasis to specific frames, steering angles, values that are more likely to represent valid signals instead of noise, etc.

In one embodiment of the invention, a plurality of first image power values are determined. The plurality of first image power values are associated to locations in the image, or the plurality of images, acquired in the first imaging state.

Thus, the plurality of first image power values may for instance be an array of power values associated to a plurality of depths location along the region imaged.

At least one second image power value is also determined based on the image acquired in the second imaging state 700.

Accordingly, a plurality of second image power values may be determined and be associated to locations in the image, or plurality of images, acquired in the second imaging state with the initial second image gain compensation.

The plurality of first image power values and the plurality of second image power values can thus form respective mean power vs depth curves of the respective images data before and after the transition.

If needed, a step of interpolation can be performed on one of the plurality of first image power values and the plurality of second image power values or on both values. This way, the mean power vs depth curves before and after the transition can have identical spatial sampling.

Then, at least one image power change value may be determined based on said first image power value and said second image power value 800.

When respective plurality of first and second image power values are determined, a plurality of image power change values may accordingly be determined, based on said plurality of first image power values and said plurality of second image power values.

The image power change values are indicative of the change in global and/or local image power between the first and the second imaging state. The image power change values are thus obtained by comparing the mean power vs depth curves before and after the transition.

The nature of said comparison depends on the type of the analysed image data.

By way of example only, in one embodiment of the invention, the images may comprise envelope values of beamformed ultrasound acquisitions obtained at the output of an envelope detection module 5d of the signal processing chain 5. The image respectively acquired in the first and second imaging states may thus respectively comprise envelope values of beamformed ultrasound acquisitions obtained in the first and second imaging states.

In this specific example, the image power values may then comprise mean power values of said envelope values, in particular a global mean power value of the images or local power values associated to location in the images or the imaged region.

Accordingly, the image power change value may then be determined by dividing the first image power value by the second image power value. Alternatively, image power change values may be determined by dividing first image power values by second image power values that are associated to an identical or close location in the image or the imaged region.

The image power change value can further be compensated for effects that at least one subsequent module 5j of the signal processing chain 5 have on signal power in the first imaging state and the second imaging state.

For instance, in the above example where images comprise envelope values of beamformed ultrasound acquisitions obtained at the output of the envelope detection module 5d of the signal processing chain 5, the image power change value may be compensated for the effects of a log compressor module 5e that follows the envelope detection module 5d.

More precisely, the log compressor module 5e may use a first compression threshold in the first imaging state and a second compression threshold in the second imaging state to compute a log compressed signal.

The image power change value may then be compensated as a function of the first compression threshold and the second compression threshold.

In one specific example, a log compressor and grayscale mapping module 5e in a B-mode imaging state may compute a compressed grayscale values as follows:

$$Y=(20*log10(X)-Ct\_1)*Dr\_Db/255$$

where X is the input envelope value, Y is the compressed grayscale value which is subsequently cropped between 0 and 255, and Ct_1 is the first compression threshold and Dr_Db is a dynamic range of the envelope value.

In this specific example, a compensated image power change value IPC_comp may be determined as a function of the image power change value IPC, the first compression threshold Ct_1 and the second compression threshold Ct_2 as follows:

$$IPC\_comp = 20*log10(IPC) - Ct\_1 + Ct\_2$$

In the above example, the first and second compression thresholds may be in dB units.

Eventually, an adjusted second image gain compensation can be determined 900 based on said initial second image gain compensation and said image power change value or said plurality of image power change values.

In the above example, the adjusted second image gain compensation may simply be determined by summing the initial second image gain compensation and the image power change value.

When the initial second image gain compensation is a location dependant image gain compensation, the summing of the initial second image gain compensation and the plurality of image power change values may be performed by summing each initial second image gain compensation values associated to a specific location of the image, or the imaged region, with the image power change value associated to the same location.

An image may then be acquired in the second imaging state with the adjusted second image gain compensation.

A final image acquired in the second imaging state with the adjusted second image gain compensation can then be displayed to an operator, stored in a memory and/or transferred to a distant server or processing unit.

Alternatively, a smooth transition between imaging states may be created by sequentially acquiring images with second image gain compensation gradually varying from the initial second image gain compensation to the adjusted second image gain compensation. This gradual variation may be performed in a sequence of small steps to minimize brightness discontinuities. Thus a series of interpolated second image gain compensation may be computed by interpolating between the initial second image gain compensation and the adjusted second image gain compensation.

Also, an optional processing step may comprise a determination of the similarity of the image data acquired in the first and second imaging state, for example by calculating a normalized cross-correlation coefficient operator between the image data in the first and second imaging state in a moving-window manner. A spatially-varying combination of the initial second image gain compensation and the adjusted second image gain compensation may then be computed based on the similarity results per location in the images or the imaged region.

This optional processing step may be useful when the image content changes radically before/after the transition, such as when the transducer is moved rapidly during the transition, or when some regions of a post-transition B-mode image are dominated by noise due to poorer penetration of the new state.

Spatial combinations of the initial second image gain compensation, the adjusted second image gain compensation and said interpolated second image gain compensation may thus be computed for acquiring images.

For those cases, the actual image gain compensation applied may then vary locally from the initial second image gain compensation, for instance in case of lack of similarity, to the adjusted second image gain compensation, for instance in case of perfect similarity.

## Claims

1. In a medical diagnostic imaging system (1), a method for adjusting image gain compensation during a transition from a first imaging state to a second imaging state, wherein the first imaging state differs from the second imaging state, the method comprising the steps of:

- determining (600) at least one first image power value based on at least one image acquired in the first imaging state with a first image gain compensation, said image acquired in the first imaging state being produced by a series of ultrasound waves emission and ultrasound signal acquisition;
- determining (700) at least one second image power value based on at least one image acquired in the second imaging state with an initial second image gain compensation, said image acquired in the second imaging state being produced by a series of ultrasound waves emission and ultrasound signal acquisition ;
- determining (800) at least one image power change value based on said first image power value and said second image power value ;
- determining (900) at least one adjusted second image gain compensation based on said initial second image gain compensation and said image power change value.

2. The method of claim 1 further comprising the steps of:

- receiving (100) a request to perform a transition from the first imaging state to the second imaging state;
- storing (200) the at least one image acquired in the first imaging state with the first image gain compensation;
- switching (300) from the first imaging state to the second imaging state;
- determining (400) the initial second image gain compensation;
- storing (500) the at least one image acquired in the second imaging state with the initial second image gain compensation.

3. The method of claim 1 or 2, wherein the image gain compensation is a global gain of the image.

4. The method of anyone of claims 1 to 3, wherein the image gain compensation is a location dependant image gain compensation, in particular time gain compensation or lateral gain compensation.

5. The method of anyone of claims 1 to 4, wherein
a plurality of first image power values are determined, being associated to locations in said at least one image acquired in the first imaging state;
a plurality of second image power values are determined, being associated to locations in said at least one image acquired in the second imaging state with the initial second image gain compensation;
a plurality of image power change values are determined based on said plurality of first image power values and said plurality of second image power values; and the adjusted second image gain compensation is determined based on said initial second image gain compensation and said plurality of
image power change values.

6. The method of anyone of claims 1 to 5, wherein said images comprise beamformed signal values of ultrasound acquisitions, said beamformed signal values being obtained at the output of a module (5i) of a mid-end processing (5b) or a back-end processing (5c) portion of a signal processing chain (5) of the medical diagnostic imaging system (1).

7. The method of claim 6, wherein the image power change value is compensated for effects that at least one subsequent module (5j) of the signal processing chain (5) of the medical diagnostic imaging system (1) have on signal power in the first imaging state and the second imaging state.

8. The method of anyone of claims 1 to 7,
wherein said images comprise envelope values of beamformed ultrasound acquisitions obtained at the output of an envelope detection module (5d) of a signal processing chain (5) of the medical diagnostic imaging system (1),
wherein said image power values comprise mean power values of said envelope values, and
wherein the image power change value is determined by dividing the first image power value by the second image power value.

9. The method of anyone of claims 1 to 8, wherein the image power change value is determined as a function of a first compression threshold and a second compression threshold, said compression thresholds being respectively used by a log compressor module (5e) of a signal processing chain (5) of the medical diagnostic imaging system (1), respectively in the first imaging state and the second imaging state.

10. The method of anyone of claims 2 to 9, wherein during a step of storing at least one image acquired, a plurality of n images are stored, n being a multiple of a number of steering angles used to form a spatially compounded frame.

11. The method of anyone of claims 1 to 10, further comprising a step of displaying an image acquired in the second imaging state with the adjusted second image gain compensation.

12. The method of claim 1, wherein the first imaging state differs from the second imaging state by at least one of the following features: amplitude of the transmit voltage, duration of the transmit voltage, acoustic power, number of focal zones, location of focal zones, dynamic range, compression curve characteristics, central frequency of the transmit ultrasound pulse, bandwidth of the transmit ultrasound pulse, filter applied to the received ultrasound signals, fundamental or harmonic imaging mode, number of steering angles, range of steering angles, spatial compounding, spatial compounding options, transmit apertures, receive apertures, line densities, B-mode-only imaging or composite imaging, temporal versus spatial resolution optimization setting, penetration versus spatial resolution optimization setting.

13. The method of anyone of claims 1 to 12, wherein the first imaging state and the second imaging states are B-mode imaging states and/or composite imaging states comprising a B-mode imaging states.

14. A medical diagnostic imaging system (1), adapted for adjusting image gain compensation during a transition from a first imaging state to a second imaging state, wherein the first imaging state differs from the second imaging state, comprising:

- means of acquiring (3, 7, 5) at least one image in the first imaging state with a first image gain compensation and at least one image acquired in the second imaging state with an initial second image gain compensation, said images acquired in the first imaging state and in the second imaging state being produced by a series of ultrasound waves emission and ultrasound signal acquisition;
- means of determining (4) a first image power value based on said image acquired in the first imaging state;
- means of determining (4) a second image power value based on said image acquired in the second imaging state;
- means of determining (4) an image power change value based on said first image power value and said second image power value; and
- means of determining (4) an adjusted second image gain compensation based on said initial second image gain compensation and said image power change value.

**Patentansprüche**

1. Verfahren zum Anpassen einer Bildverstärkungskompensation während eines Übergangs von einem ersten Bildgebungszustand zu einem zweiten Bildgebungszustand, in einem medizinischen Diagnose-Bildgebungssystem (1), wobei sich der erste Bildgebungszustand von dem zweiten Bildgebungszustand unterscheidet, wobei das Verfahren die folgenden Schritte umfasst:

- Bestimmen (600) wenigstens eines ersten Bildleistungswerts auf Grundlage wenigstens eines Bildes, welches in dem ersten Bildgebungszustand mit einer ersten Bildverstärkungskompensation aufgenommen worden ist, wobei das in dem ersten Bildgebungszustand aufgenommene Bild durch eine Serie aus einer Ultraschallwellen-Emission und einer Ultraschallsignal-Aufnahme erzeugt wird;
- Bestimmen (700) wenigstens eines zweiten Bildleistungswerts auf Grundlage wenigstens eines Bildes, welches in dem zweiten Bildgebungszustand mit einer initialen zweiten Bildverstärkungskompensation aufgenommen worden ist, wobei das in dem zweiten Bildgebungszustand aufgenommene Bild durch eine Serie aus einer Ultraschallwellen-Emission und einer Ultraschallsignal-Aufnahme erzeugt wird;
- Bestimmen (800) wenigstens eines Bildleistungsänderungswerts auf Grundlage des ersten Bildleistungswerts und des zweiten Bildleistungswerts;
- Bestimmen (900) wenigstens einer angepassten zweiten Bildverstärkungskompensation auf Grundlage der initialen zweiten Bildverstärkungskompensation und des Bildleistungsänderungswerts.

2. Verfahren nach Anspruch 1, ferner umfassend die folgenden Schritte:

- Empfangen (100) einer Anfrage, um einen Übergang von dem ersten Bildgebungszustand zu dem zweiten Bildgebungszustand durchzuführen;

- Speichern (200) des wenigstens einen Bildes, welches in dem ersten Bildgebungszustand mit der ersten Bildverstärkungskompensation aufgenommen worden ist;
- Umschalten (300) von dem ersten Bildgebungszustand zu dem zweiten Bildgebungszustand;
- Bestimmen (400) der initialen zweiten Bildverstärkungskompensation;
- Speichern (500) des wenigstens einen Bildes, welches in dem zweiten Bildgebungszustand mit der initialen zweiten Bildverstärkungskompensation aufgenommen worden ist.

3. Verfahren nach Anspruch 1 oder 2, wobei die Bildverstärkungskompensation eine globale Verstärkung des Bildes ist.

4. Verfahren nach einem der Ansprüche 1 bis 3, wobei die Bildverstärkungskompensation eine ortsabhängige Bildverstärkungskompensation, insbesondere eine zeitliche Verstärkungskompensation oder eine laterale Verstärkungskompensation, ist.

5. Verfahren nach einem der Ansprüche 1 bis 4, wobei

eine Mehrzahl erster Bildleistungswerte bestimmt wird, welche Orten in dem wenigstens einen Bild zugeordnet sind, welches in dem ersten Bildgebungszustand aufgenommen worden ist,
eine Mehrzahl zweiter Bildleistungswerte bestimmt wird, welche Orten in dem wenigstens einen Bild zugeordnet sind, welches in dem zweiten Bildgebungszustand mit der initialen zweiten Bildverstärkungskompensation aufgenommen worden ist,
auf Grundlage der Mehrzahl erster Bildleistungswerte und der Mehrzahl zweiter Bildleistungswerte eine Mehrzahl von Bildleistungsänderungswerten bestimmt wird; und
auf Grundlage der initialen zweiten Bildverstärkungskompensation und der Mehrzahl von Bildleistungsänderungswerten die angepasste zweite Bildverstärkungskompensation bestimmt wird.

6. Verfahren nach einem der Ansprüche 1 bis 5, wobei die Bilder strahlgeformte Signalwerte von Ultraschallaufnahmen umfassen, wobei die strahlgeformten Signalwerte an dem Ausgang eines Moduls (5i) eines Mid-End-Verarbeitung (5b) oder eines Back-End-Verarbeitung (5c)-Abschnitts einer Signalverarbeitungskette (5) des medizinischen Diagnose-Bildgebungssystems (1) erhalten werden.

7. Verfahren nach Anspruch 6, wobei der Bildleistungsänderungswert hinsichtlich Effekten kompensiert wird, welche wenigstens ein nachfolgendes Modul (5j) der Signalverarbeitungskette (5) des medizinischen Diagnose-Bildgebungssystems (1) auf die Signalleistung in dem ersten Bildgebungszustand und dem zweiten Bildgebungszustand hat.

8. Verfahren nach einem der Ansprüche 1 bis 7,

wobei die Bilder Hüllkurvenwerte der strahlgeformten Ultraschallaufnahmen umfassen, welche an dem Ausgang eines Hüllkurvendetektionsmoduls (5d) einer Signalverarbeitungskette (5) des medizinischen Diagnose-Bildgebungssystems (1) erhalten werden,
wobei die Bildleistungswerte mittlere Leistungswerte der Hüllkurvenwerte umfassen, und
wobei der Bildleistungsänderungswert durch Dividieren des ersten Bildleistungswerts durch den zweiten Bildleistungswert bestimmt wird.

9. Verfahren nach einem der Ansprüche 1 bis 8, wobei der erste Bildleistungsänderungswert als eine Funktion einer ersten Kompressionsschwelle und einer zweiten Kompressionsschwelle bestimmt wird, wobei die Kompressionsschwellen jeweils durch ein Log-Kompressormodul (5e) einer Signalverarbeitungskette (5) des medizinischen Diagnose-Bildgebungssystems (1) in dem ersten Bildgebungszustand bzw. in dem zweiten Bildgebungszustand verwendet werden.

10. Verfahren einem der Ansprüche 2 bis 9, wobei während eines Schrittes eines Speicherns wenigstens eines aufgenommenen Bildes, eine Mehrzahl von n Bildern gespeichert wird, wobei n ein Vielfaches einer Zahl von Steuerwinkeln ist, welche verwendet werden, um einen räumlich zusammengesetzten Frame zu bilden.

11. Verfahren nach einem der Ansprüche 1 bis 10, ferner umfassend einen Schritt eines Anzeigens eines in dem zweiten Bildgebungszustand mit der angepassten zweiten Bildverstärkungskompensation aufgenommenen Bildes.

**12.** Verfahren nach Anspruch 1, wobei sich der erste Bildgebungszustand von dem zweiten Bildgebungszustand hinsichtlich wenigstens eines der folgenden Merkmale unterscheidet: eine Amplitude der Übertragungsspannung, eine Dauer der Übertragungsspannung, eine akustische Leistung, eine Zahl von Fokalzonen, einen Ort von Fokalzonen, einen dynamischen Bereich, Kompressionskurveneigenschaften, eine Mittenfrequenz des Übertragungsultraschallimpulses, eine Bandbreite des Übertragungsultraschallimpulses, einen auf die empfangenen Ultraschallsignale angewendeten Filter, einen fundamentalen oder harmonischen Bildgebungsmodus, eine Zahl von Steuerwinkeln, einen Bereich von Steuerwinkeln, ein räumliches Zusammensetzen, Optionen eines räumlichen Zusammensetzens, Übertragungsöffnungen, Empfangsöffnungen, Liniendichten, eine nur B-Modus-Bildgebung oder eine zusammengesetzte Bildgebung, eine Einstellung einer zeitlichen versus räumlichen Auflösungsoptimierung, eine Einstellung einer Auflösungsoptimierung einer Durchdringung versus einer räumlichen Auflösungsoptimierung.

**13.** Verfahren nach einem der Ansprüche 1 bis 12, wobei der erste Bildgebungszustand und der zweite Bildgebungszustand B-Modus-Bildgebungszustände und/oder Zustände einer zusammengesetzten Bildgebung sind, welche B-Modus-Bildgebungszustände umfassen.

**14.** Medizinisches Diagnose-Bildgebungssystem (1), welches dazu eingerichtet ist, eine Bildverstärkungskompensation während eines Übergangs von einem ersten Bildgebungszustand zu einem zweiten Bildgebungszustand anzupassen, wobei sich der erste Bildgebungszustand von dem zweiten Bildgebungszustand unterscheidet, umfassend:

- Mittel zum Aufnehmen (3, 7, 5) wenigstens eines Bildes in dem ersten Bildgebungszustand mit einer ersten Bildverstärkungskompensation und wenigstens eines Bildes, welches in dem zweiten Bildgebungszustand mit einer initialen zweiten Bildverstärkungskompensation aufgenommen worden ist, wobei die in dem ersten Bildgebungszustand und in dem zweiten Bildgebungszustand aufgenommenen Bilder durch eine Serie aus einer Ultraschallwellen-Emission und einer Ultraschallsignal-Aufnahme erzeugt werden;
- Mittel zum Bestimmen (4) eines ersten Bildleistungswerts auf Grundlage des in dem ersten Bildgebungszustand aufgenommenen Bildes;
- Mittel zum Bestimmen (4) eines zweiten Bildleistungswerts auf Grundlage des in dem zweiten Bildgebungszustand aufgenommenen Bildes;
- Mittel zum Bestimmen (4) eines Bildleistungsänderungswerts auf Grundlage des ersten Bildleistungswerts und des zweiten Bildleistungswerts; und
- Mittel zum Bestimmen (4) einer angepassten zweiten Bildverstärkungskompensation auf Grundlage der initialen zweiten Bildverstärkungskompensation und des Bildleistungsänderungswerts.

**Revendications**

**1.** Dans un système d'imagerie diagnostique médicale (1), un procédé pour ajuster une compensation de gain d'image pendant une transition d'un premier état d'imagerie à un second état d'imagerie, dans lequel le premier état d'imagerie diffère du second état d'imagerie, le procédé comprenant les étapes suivantes :

- la détermination (600) d'au moins une première valeur de puissance d'image sur la base d'au moins une image acquise dans le premier état d'imagerie avec une première compensation de gain d'image, ladite image acquise dans le premier état d'imagerie étant produite par une série d'émission d'ondes ultrasonores et d'acquisition de signaux ultrasonores ;
- la détermination (700) d'au moins une seconde valeur de puissance d'image sur la base d'au moins une image acquise dans le second état d'imagerie avec une seconde compensation initiale de gain d'image, ladite image acquise dans le second état d'imagerie étant produite par une série d'émission d'ondes ultrasonores et d'acquisition de signaux ultrasonores ;
- la détermination (800) d'au moins une valeur de changement de puissance d'image sur la base de ladite première valeur de puissance d'image et de ladite seconde valeur de puissance d'image ;
- la détermination (900) d'au moins une seconde compensation ajustée de gain d'image sur la base de ladite seconde compensation initiale de gain d'image et de ladite valeur de changement de puissance d'image.

**2.** Procédé selon la revendication 1, comprenant en outre les étapes suivantes :

- la réception (100) d'une requête pour effectuer une transition du premier état d'imagerie au second état d'imagerie ;
- le stockage (200) de l'au moins une image acquise dans le premier état d'imagerie avec la première compensation de gain d'image ;
- le passage (300) du premier état d'imagerie au second état d'imagerie ;
- la détermination (400) de la seconde compensation initiale de gain d'image ;
- le stockage (500) de l'au moins une image acquise dans le second état d'imagerie avec la seconde compensation initiale de gain d'image.

3. Procédé selon la revendication 1 ou 2, dans lequel la compensation de gain d'image est un gain global de l'image.

4. Procédé selon l'une quelconque des revendications 1 à 3, dans lequel la compensation de gain d'image est une compensation de gain d'image dépendant de l'emplacement, en particulier une compensation de gain de temps ou une compensation de gain latéral.

5. Procédé selon l'une quelconque des revendications 1 à 4, dans lequel une pluralité de premières valeurs de puissance d'image sont déterminées, étant associées à des emplacements dans ladite au moins une image acquise dans le premier état d'imagerie ;
une pluralité de secondes valeurs de puissance d'image sont déterminées, étant associées à des emplacements dans ladite au moins une image acquise dans le second état d'imagerie avec la seconde compensation initiale de gain d'image ;
une pluralité de valeurs de changement de puissance d'image sont déterminées sur la base de ladite pluralité de premières valeurs de puissance d'image et de ladite pluralité de secondes valeurs de puissance d'image ; et
la seconde compensation ajustée de gain d'image est déterminée sur la base de ladite seconde compensation initiale de gain d'image et de ladite pluralité de valeurs de changement de puissance d'image.

6. Procédé selon l'une quelconque des revendications 1 à 5, dans lequel lesdites images comprennent des valeurs de signal en forme de faisceau d'acquisitions d'ultrasons, lesdites valeurs de signal en forme de faisceau étant obtenues à la sortie d'un module (5i) d'une partie de traitement intermédiaire (5b) ou de traitement d'arrière-plan (5c) d'une chaîne de traitement de signal (5) du système d'imagerie diagnostique médicale (1).

7. Procédé selon la revendication 6, dans lequel la valeur de changement de puissance d'image est compensée pour les effets qu'au moins un module (5j) ultérieur de la chaîne de traitement de signal (5) du système d'imagerie diagnostique médicale (1) a sur une puissance de signal dans le premier état d'imagerie et le second état d'imagerie.

8. Procédé selon l'une quelconque des revendications 1 à 7,
dans lequel lesdites images comprennent des valeurs d'enveloppe d'acquisitions d'ultrasons en forme de faisceau obtenues à la sortie d'un module de détection d'enveloppe (5d) d'une chaîne de traitement de signal (5) du système d'imagerie diagnostique médicale (1),
dans lequel lesdites valeurs de puissance d'image comprennent des valeurs de puissance moyennes desdites valeurs d'enveloppe, et
dans lequel la valeur de changement de puissance d'image est déterminée en divisant la première valeur de puissance d'image par la seconde valeur de puissance d'image.

9. Procédé selon l'une quelconque des revendications 1 à 8, dans lequel la valeur de changement de puissance d'image est déterminée en fonction d'un premier seuil de compression et d'un second seuil de compression, lesdits seuils de compression étant respectivement utilisés par un module de compression logarithmique (5e) d'une chaîne de traitement de signal (5) du système d'imagerie diagnostique médicale (1), respectivement dans le premier état d'imagerie et le second état d'imagerie.

10. Procédé selon l'une quelconque des revendications 2 à 9, dans lequel au cours d'une étape de stockage d'au moins une image acquise, une pluralité de n images sont stockées, n étant un multiple d'un nombre d'angles de direction utilisés pour former une trame spatialement composée.

11. Procédé selon l'une quelconque des revendications 1 à 10, comprenant en outre une étape d'affichage d'une image acquise dans le second état d'imagerie avec la seconde compensation ajustée de gain d'image.

12. Procédé selon la revendication 1, dans lequel le premier état d'imagerie diffère du second état d'imagerie par au moins l'une des caractéristiques suivantes : l'amplitude de la tension d'émission, la durée de la tension d'émission, la puissance acoustique, le nombre de zones focales, l'emplacement des zones focales, la plage dynamique, les caractéristiques de la courbe de compression, la fréquence centrale de l'impulsion ultrasonore d'émission, la largeur de bande de l'impulsion ultrasonore d'émission, le filtre appliqué aux signaux ultrasonores reçus, le mode d'imagerie fondamental ou harmonique, le nombre d'angles de direction, la plage d'angles de direction, la composition spatiale, les options de composition spatiale, les ouvertures d'émission, les ouvertures de réception, les densités de ligne, une imagerie en mode B uniquement ou une imagerie composite, le réglage d'optimisation de la résolution temporelle par rapport à la résolution spatiale, le réglage d'optimisation de la pénétration par rapport à la résolution spatiale.

13. Procédé selon l'une quelconque des revendications 1 à 12, dans lequel le premier état d'imagerie et les seconds états d'imagerie sont des états d'imagerie en mode B et/ou des états d'imagerie composite comprenant des états d'imagerie en mode B.

14. Système d'imagerie diagnostique médicale (1), adapté pour ajuster une compensation de gain d'image lors d'une transition d'un premier état d'imagerie à un second état d'imagerie, dans lequel le premier état d'imagerie diffère du second état d'imagerie, comprenant :

 - un moyen d'acquisition (3, 7, 5) d'au moins une image dans le premier état d'imagerie avec une première compensation de gain d'image et d'au moins une image acquise dans le second état d'imagerie avec une seconde compensation initiale de gain d'image, lesdites images acquises dans le premier état d'imagerie et dans le second état d'imagerie étant produites par une série d'émission d'ondes ultrasonores et d'acquisition de signaux ultrasonores ;
 - un moyen de détermination (4) d'une première valeur de puissance d'image sur la base de ladite image acquise dans le premier état d'imagerie ;
 - un moyen de détermination (4) d'une seconde valeur de puissance d'image sur la base de ladite image acquise dans le second état d'imagerie ;
 - un moyen de détermination (4) d'une valeur de changement de puissance d'image sur la base de ladite première valeur de puissance d'image et de ladite seconde valeur de puissance d'image ; et
 - un moyen de détermination (4) d'une seconde compensation ajustée de gain d'image sur la base de ladite seconde compensation initiale de gain d'image et de ladite valeur de changement de puissance d'image.

**FIG. 1**

**FIG. 2**

CHG REQST — 100

STR 1ST IMAG — 200

SWTCH IMG STAT — 300

DET INIT 2ND G — 400

STR 2ND IMAG — 500

DET 1ST IPV — 600

DET 2ND IPV — 700

DET IPCV — 800

DET ADJ 2ND G — 900

## REFERENCES CITED IN THE DESCRIPTION

**Patent documents cited in the description**

- US 5579768 A
- US 6102859 A
- US 6120446 A

- US 6743174 B
- US 20030236459 A1

**Non-patent literature cited in the description**

- **S D PYE et al.** Adaptive time gain compensation for ultrasonic imaging. *Ultrasound Med Biol,* 1992, 205-212